Europäisches Patentamt

European Patent Office

Office européen des brevets

(19)

(11) Publication number: 0 353 383
A2

(12) EUROPEAN PATENT APPLICATION

(21) Application number: 89105662.4

(22) Date of filing: 30.03.89

(51) Int. Cl.⁴: G06F 13/38 , G06F 15/16 , G06F 9/46

(30) Priority: 05.08.88 US 229089

(43) Date of publication of application:
07.02.90 Bulletin 90/06

(84) Designated Contracting States:
DE FR GB IT NL

(71) Applicant: COMPAQ TELECOMMUNICATIONS
CORPORATION
20555 S.H. 249
Houston Texas 77070(US)

(72) Inventor: Bobco, Shirley M.
2217 High Point Drive
Carrollton Texas 75007(US)
Inventor: Garner, Paul M.
28 Tanager Trail
The Woodlands Texas 77381(US)

(74) Representative: Klunker . Schmitt-Nilson .
Hirsch
Winzererstrasse 106
D-8000 München 40(DE)

(54) Method for switching incoming data communications between processes in a multi-process system in response to the type of communication.

(57) A method is provided which allows two or more processes (or processors) to share a communications device such as a modem. This is accomplished by providing the multitasking communications-receiving computer (or multiple-processor system) with software which switches control of the modem among different processes after a communications link has been established. In the method, a communication connection is established while the communications device is controlled by a control process. The control process determines the type of incoming communication. The appropriate process for handling the incoming communication is then selected on the basis of the type determination. Finally, the control process delivers control of the connected communications device to the selected process.

Fig.1

# METHOD FOR SWITCHING INCOMING DATA COMMUNICATIONS BETWEEN PROCESSES IN A MULTI-PROCESS SYSTEM IN RESPONSE TO THE TYPE OF COMMUNICATION

This invention particularly relates to switching a modem or other communications device from one use to another in a multi-process or multi-processor system in response to the type of incoming call. More specifically, a communications link of an unknown type and origin is established; then the type and origin are determined; and then control of the communications device by the appropriate process is selected in response to that determination.

The environment in which the present invention has application comprises a processor handling a plurality of processes substantially simultaneously (or, as one embodiment, a computer system having a plurality of processors), a communications device which must receive at least two types of incoming data communication at least one type of which needs to be handled by one process (or processor) and at least one other type which needs to be handled by another process (or processor), and both processes (or processors) require direct control of the communications device.

Stated another way, the environment includes multiple call types, multiple processes, a shared communications device (e.g., a modem, UART, USART, etc.), and means for switching control of an ongoing communications connection between two processes.

A UART (Universal Asynchronous Receiver Transmitter) is a semiconductor component which performs asynchronous communication functions. A computer system which utilizes a UART as a serial communications port transfers information by reading from and writing to registers that physically reside within the UART. The registers logically reside within the I/O address space reserved by the computer for the asynchronous serial interface.

A USART (Universal Synchronous-Asynchronous Receiver Transmitter) is a semiconductor component which performs both synchronous and asynchronous communication functions under program control.

A modem is a device used to convert serial digital data from a transmitting terminal (such as from the UART serial port of a computer) to a signal suitable for transmission over a telephone channel and to reconvert the signal to serial digital data for acceptance by a receiving terminal. The receiving terminal may likewise be a computer having a UART serial port.

A modem typically does not detect dial tones or distant busy or ringing signals. Messages from the modem inform the user only when a connection is made to another modem or when a carrier signal is not received. On loss of carrier (either intentional or unintentional) the modem returns automatically to the local command state. If the carrier tone is not heard within the specified time period, it hangs up and returns the result code NO CARRIER. If a carrier tone is detected, the modem returns a CONNECT result code and goes on-line.

Carrier signals are signals exchanged by modems over telephone lines. They are continuous, audible tones at predetermined frequencies.

To establish a connection between two remote computers via the telephone lines, one modem originates a call to another compatible modem. When the second modem answers the call, the modems exchange signals (tones) that allow a data communications connection to be made.

Industry standards specify which tones to send to originate and which tones to send to answer a data communications call. Two modems set to originate a call cannot reach each other since both would transmit the same signal on the same channel and neither would be "listening."

The information utilities, electronic mail services, bulletin boards, and time-sharing systems are established as answer-only applications so that a user may originate a call to them; some modems are designed only to answer calls. When two microcomputers wish to communicate, however, the users must decide which modem will originate and which will answer the call.

For computer processing, data must be expressed in numerical form. The binary number system is used so that each character (letter, number, or symbol) may be expressed as a special sequence of the binary digits (or bits) 0 and 1.

To transfer data bit by bit, a device need only be capable of representing two numbers (0 and 1).

However, digital microcomputers generate and use digital signals, whereas the telephone system transmits only analog signals as tones. The computer's digital signals occur as two distinct states (0 or 1, OFF or ON, High or Low, etc.). In contradistinction, analog signals vary continuously.

A modulator is used to convert digital signals into analog signals and a demodulator to reconvert the signals from the computer or terminal connected to it. A modem performs both the modulator and demodulator functions; the word "modem" is a contraction of MOdulate-DEModulate. To communicate, both ends of a line must be equipped with a modem and certain characteristics of the modems must be alike.

Compatibility between modems is determined by design and operating characteristics, such as the frequencies at which the modems transmit, the signaling techniques they use, and the transmission speeds of which they are capable. The fundamental characteristics of modems are described below.

The signals exchanged by modems are referred to as carrier signals--continuous audible tones, at predetermined frequencies, used to carry information over the telephone line. Whenever the carrier signal disappears, the connection is broken between the modems.

Electronic signals for transmission on communication lines are generated as sine waves.

The sine wave proceeds over time from a zero level, to a positive level, then to an equal negative level, and back to zero. The more cycles per unit of time, the higher the frequency of the signal.

Information is transmitted by altering the carrier signal. The representation of digital information (the binary "one" and the binary "zero") requires only two states. Therefore, digital information may be transmitted by the carrier signal by altering the signal one way to represent one state and another way to represent the other state. The change is accomplished by a technique called modulation.

The three types of modulation of the sine wave signal change either its amplitude (magnitude or voltage level), frequency (number of complete oscillations of the signal per unit of time), or phase (location at which a signal crosses the zero level, relative to the previous signal).

Typically, the modems used for most personal computers use a type of frequency modulation called frequency shift keying (FSK) for modulating the low speed signal (110 and 300 baud) and a type of phase modulation called phase shift keying (PSK) for modulating a higher speed signal (1200 baud).

At the low speed, the carrier signal is modulated between different frequencies to represent 0 and 1. For example, the originating modem may transmit at 1270 hertz to represent the binary digital "1" and transmit at 1070 hertz for "0" while it receives a "1" at 2225 hertz and a "0" at 2025 hertz. Similarly, the high speed carrier signal transmits at one frequency and receives at another; however, a 0 or a 1 is indicated by a change in the phase of the steady signal.

The term "handshaking" in this context means the establishment of synchronization between sending and receiving equipment by means of exchange of specific character configurations.

For the purposes of this discussion, the different types of incoming data communication will be illustrated as electronic mail (e-mail) and remote access. It should be understood, however, that the present invention is not limited to differentiation between those particular applications, but rather may be employed to accommodate the receipt of many different types of data communication.

Remote access or "remote computing" programs are commonly designed mainly for unattended remote operation and for long-distance support and collaboration. These programs turn one computer into a host, which runs whatever application program one is using; the other unit becomes a remote terminal. Both host and remote, however, show the same screens (video output) and can give orders to the application program. Typical host-terminal programs are capable of fully unattended operation and can also work for computer conferencing.

A properly equipped computer may be set up to allow access from another computer in a remote location via a modem. Direct connection (e.g., through a computer's RS-232 serial port) could also be made for the purposes of establishing remote access.

Once a connection is established, using appropriate software, the host computer may be controlled via the keyboard of the remote computer, just as if the user were sitting at the host computer's keyboard. Likewise, the display seen by the user on the screen of the remote computer will duplicate that of the host computer. This allows access to software running on the host computer. Programs on the host computer may be loaded and executed via commands from the remote computer functioning as a terminal.

To establish a connection, two steps are required: (1) the host computer must be set up for remote access (i.e., be equipped with the necessary software to recognize a remote access attempt and allow control from signals received via a communications port); and, (2) a remote access program which sends commands to and receives data from the host computer (e.g., for screen display) must be run on the remote computer.

Electronic mail (e-mail) is a common application of personal computers. Messages are composed at one computer and sent to another computer. Typically, this communication takes place over telephone lines and both the sending computer and the receiving computer are equipped with modems.

It is desirable to have e-mail sent and received without interrupting programs running on either the sending or receiving computer. In fact, it would be unusual to have an application program (which is not concerned with e-mail) include provisions for dealing with an incoming e-mail message while that program is running. Accordingly, some multi-purpose computers incorporate a dedicated microprocessor for sending and receiving e-mail. This microprocessor controls the modem, schedules transmissions, and passes incoming messages to the main processor for storage (e.g., on a magnetic disk). All this can occur while the other processor is simultaneously performing other tasks--e.g., running a word processing program or performing a spreadsheet recalculation.

A problem arises, however, when an incoming call is neither a voice transmission nor an e-mail, but rather is an attempt to establish remote access. Prior to the instant invention, it was assumed that incoming communications were of a single type and once it was established that the incoming call was a data transmission (usually by the presence of a carrier), a handshaking routine would be initiated by the process handling the communications device to determine whether the incoming call had the correct protocol to be capable of communicating with the answering computer. If the handshaking was unsuccessful (i.e., the incoming call was not of the expected type, e.g., an e-mail message), the process handling the call would simply terminate the connection. If the communications device was a modem, the communications process would simply hang up on the incoming call.

With the development of software for remote access came the problem of discriminating between at least two types of incoming calls for systems having provisions for e-mail. This is a particular problem for computer systems which have more than one processor, especially those systems wherein one processor is assigned the task of answering incoming data transmissions and handling e-mail while another processor is used for general purpose computing (and it is the general-purpose processor which one wishes to remotely access). A method was needed whereby multiple processors could share the use of a communications device such as a modem without breaking an already-established connection. More specifically, the solution to the problem requires that after the communications processor makes connection and determines that the incoming call is a data transmission but not an e-mail message, it transfers the call to another processor for possible establishment of remote access control. It is critical that this transfer be accomplished without breaking the established communications connection.

The present invention is a method which allows two or more processes to share a communications device such as a serial communications port (a UART or USART) or a modem connected to such a port. This is accomplished by providing the multitasking communications-receiving computer with software which switches the communications device among different processes after a communications link has been established. For purposes of this disclosure, "multitasking communications-receiving computer" means a processor running multiple processes in a multitasking, time-slicing or task-switching environment for receiving incoming data communications and establishing a communications link or an analogous system comprising a plurality of associated processors wherein different processes are run on different processors.

FIG. 1 illustrates the steps of the process wherein control of a communications device is assigned on the basis of the type of incoming data communications.

FIG. 2 is a flowchart illustrating the sequence of events which occurs when the present invention is applied to a multiprocessor system.

Application of the present invention to a multitasking system in which a plurality of processes share a communications device is illustrated in the following sequence of events:

(1) A request for connection comes in via the shared communication device.

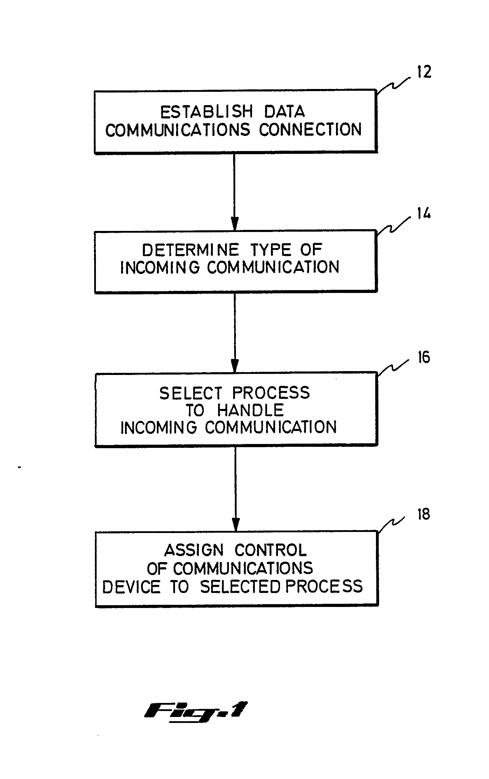

(2) A connection is established with the communications device at this point being controlled by the control process (block 12 in FIG. 1).

(3) The control process determines the type of incoming communication, e.g., by engaging in a handshaking routine--the exchange of predetermined signals for purposes of control when a communications connection is established (block 14 in FIG. 1).

(4) The appropriate process for handling the incoming communication is selected on the basis of the type determination (block 16 in FIG. 1). This may be accomplished, for example, by means of a table lookup routine with each allowed type of communication having a corresponding process in the table.

(5) The control process delivers control of the connected communications device to the selected process (block 18 in FIG. 1).

Termination of the communications session may or may not terminate the connection.

To illustrate the particular embodiment wherein the incoming communication is a remote access attempt, the following sequence of events could take place:

(a) The background process prompts the telecommunications process to check the incoming call to determine whether it is a remote access attempt (e.g., by engaging in a particular handshaking routine).

(b) The telecommunications process interfaces with the remote access process to establish the name and password of the user requesting remote access.

(c) The telecommunications process grants selected access to the various functions of the computer depending on the preselected access rights granted the particular user.

(d) The computer operates under remote access--i.e., input may come from the remote keyboard and output to the host CRT is copied to the screen of the remote computer.

To illustrate the application of the present invention in a multi-processor system, consider a system comprising a modem, a 16-bit Intel 8086 microprocessor (CPU) configured to run industry-standard software, an 8-bit Zilog Z-80 microprocessor for communications, and the usual peripherals associated with a personal computer (PC) such as a keyboard, CRT video display, disk drives, and the like. Included in the system is dual port memory--a 128-byte block in the common address space of each microprocessor through which the two CPU's can communicate.

In such a system, an incoming e-mail may be handled as follows:

(1) A call comes in over the telephone line connected to the modem.

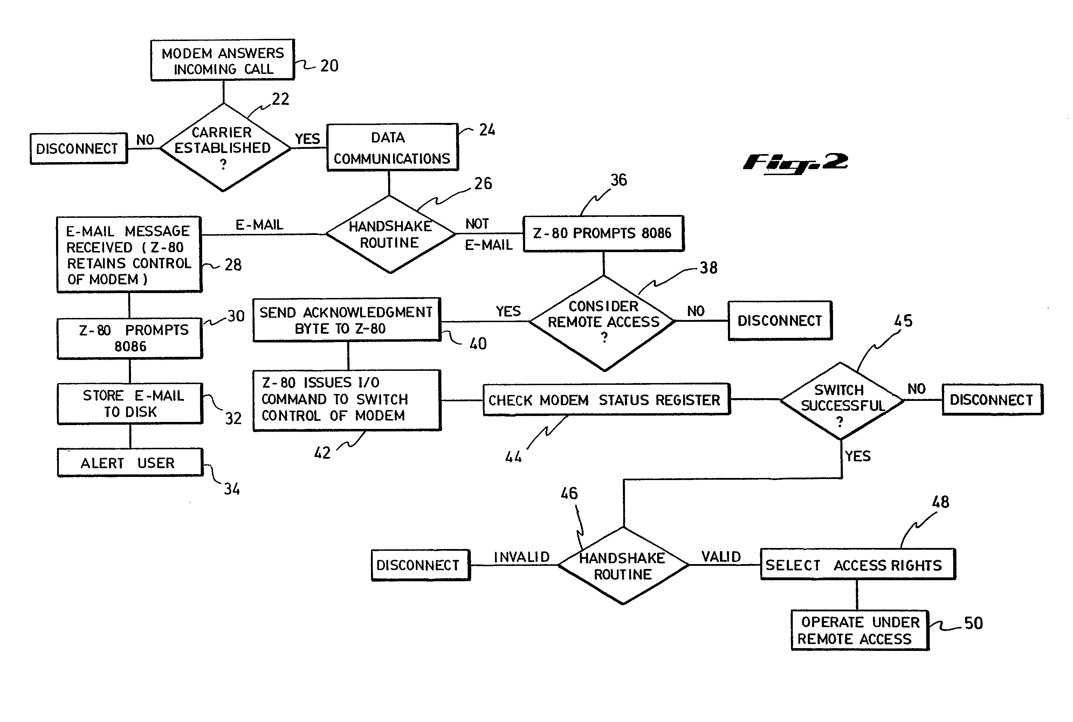

(2) The call is answered by the modem and the carrier is established (blocks 22 and 24 in FIG. 2).

(3) The Z-80 and the calling computer engage in a handshaking routine which might comprise the calling computer sending the ASCII string of characters: ""I AM A TELECOMPAQ""; and the receiving computer (the Z-80) sending in response, ""I AM A TELECOMPAQ, TOO"" (block 26 in FIG. 2).

(4) The proper link having been established, the Z-80 can receive the incoming data and can subsequently send that data to the 8086 via the dual port memory (blocks 28-30 in FIG. 2).

(5) The 8086 can write the data to disk and alert the user that an e-mail has been received which can be read by accessing the appropriate disk file (blocks 32-34 in FIG. 2).

In the past, a problem existed in systems wherein it was desired to provide for both e-mail and remote access because the systems typically considered incoming data calls to be either e-mail or an unacceptable call, in which case the standard practice was to disconnect. If the handshake was not completed, the answering modem would hang up on an incoming call. Thus, to enable remote access in such systems, a method had to be found to switch control of the communications device (e.g., the modem) from the communications dedicated processor to the general purpose processor without breaking the communications link (e.g., without loss of the carrier). Such a solution requires: (1) a method of switching control of the communications device between or among the various processors; and, (2) a method of determining what type of communication was established.

The establishment of remote access to the multiprocessor system illustrated above may occur in the following steps:

(1) A call comes in over the telephone line connected to the modem.

(2) The modem (controlled at this point by the Z-80) answers the call and a carrier is established--i.e., the call is a data transmission (blocks 20-24 in FIG. 2).

(3) The e-mail handshaking routine is unsuccessful--i.e., the incoming call is not compatible e-mail.

(4) The Z-80 prompts the 8086 to take over control of the modem by sending a certain, predetermined 4-byte command by way of the dual-port memory (block 36 in FIG. 2).

(5) If the 8086 accepts the call (i.e., it has been programmed to accept remote access), it issues an acknowledgment byte to the Z-80 via the dual-port memory (block 40) and the Z-80 switches control of the modem to the 8086 by issuing an I/O command (block 42). This is accomplished without breaking the already established communications link--i.e., the carrier is not lost. To ensure that this is the case, the 8086 checks the modem status register to determine that the communications link is still established (block 44). If the state of the modem status register indicates that the communications link has been broken, the call is disconnected (block 45).

(6) The background program running on the 8086 prompts the telecommunications program to check the incoming call to determine whether it is a remote access attempt (e.g., by engaging in a particular handshaking routine) (block 46 in FIG. 2).

(7) The telecommunications software interfaces with the remote access software to establish the name and password of the user requesting remote access (block 48 in FIG. 2).

(8) The telecommunications software grants selected access to the various functions of the computer depending on the preselected access rights granted the particular user.

(9) The computer operates under remote access--i.e., input may come from the remote keyboard and output to the host CRT is copied to the screen of the remote computer (block 50).

The foregoing description has been directed to particular embodiments of the invention in accordance with the requirements of the United States patent statutes for the purposes of illustration and explanation. It will be apparent to those skilled in this art, however, that many modifications and changes in the method set forth will be possible without departing from the scope and spirit of the invention. It is intended that the following claims be interpreted to embrace all such modifications and changes.

**Claims**

1. A process for assigning control of a shared communications device in a multitasking system which comprises:

establishing a communications connection via the shared communications device;

determining the type of communication; and,

transferring control of the communications device to a specific process on the basis of the type of communication.

2. A process for sharing a communications device in a system comprising multiple processors which comprises:

establishing a communications connection via the communications device;

determining the type of communication;

transferring control of the communications device to a specific processor on the basis of the type of communication.

3. In a system running multiple processes at least two of which processes require control of a communications device for their operation, the improvement which comprises:

providing a control process which determines the type of a communication coming into the system via the communications device and transfers control of the communications device to a specific process selected on the basis of the type of the incoming communication.

4. A process as recited in claim 1 wherein the communications device is an RS-232 serial port of a digital computer.

5. A process as recited in claim 1 wherein the communications device is a modem.

6. A process as recited in claim 1 wherein one type of communication is electronic mail and another type of communication is remote access.

7. A process as recited in claim 1 wherein transferring control of the communications device comprises issuing an I/O command.

8. A process as recited in claim 1 wherein determining the type of communication comprises a handshaking routine.

9. A process as recited in claim 1 wherein the communications device is a UART.

10. A process as recited in claim 1 wherein the communications device is a USART.

11. A process as recited in claim 2 wherein the communications device is an RS-232 serial port of a digital computer.

12. A process as recited in claim 2 wherein the communications device is a modem.

13. A process as recited in claim 2 wherein one type of communication is electronic mail and another type of communication is remote access.

14. A process as recited in claim 2 wherein transferring control of the communications device comprises issuing an I/O command.

15. A process as recited in claim 2 wherein determining the type of communication comprises a handshaking routine.

16. A process as recited in claim 2 wherein the communications device is a UART.

17. A process as recited in claim 2 wherein the communications device is a USART.

18. In a system which comprises a general-purpose processor, a communications processor, and a modem which is shared by both such processors, the improvement which comprises:

providing a control process which determines whether data communications coming into the system via the modem is of a type which is to be handled by the communications processor and which transfers control of the modem to the general-purpose processor if the incoming communication is not of a type which is to be handled by the communications processor.

19. Apparatus for assigning control of a shared communications device in a multitasking system which comprises:

means for establishing a communications connection via the shared communications device;

means for determining the type of communication; and,

means for transferring control of the communications device to a specific process on the basis of the type of communication.

20. An apparatus as recited in claim 19 wherein the shared communications device is a modem.

Fig.1

*Fig-2*

- MODEM ANSWERS INCOMING CALL — 20
- CARRIER ESTABLISHED ? — 22
  - NO → DISCONNECT
  - YES → DATA COMMUNICATIONS — 24
- HANDSHAKE ROUTINE — 26
  - E-MAIL → E-MAIL MESSAGE RECEIVED (Z-80 RETAINS CONTROL OF MODEM) — 28
    - Z-80 PROMPTS 8086 — 30
    - STORE E-MAIL TO DISK — 32
    - ALERT USER — 34
  - NOT E-MAIL → Z-80 PROMPTS 8086 — 36
- CONSIDER REMOTE ACCESS ? — 38
  - NO → DISCONNECT
  - YES → SEND ACKNOWLEDGMENT BYTE TO Z-80 — 40
- Z-80 ISSUES I/O COMMAND TO SWITCH CONTROL OF MODEM — 42
- CHECK MODEM STATUS REGISTER — 44
- SWITCH SUCCESSFUL ? — 45
  - NO → DISCONNECT
  - YES → HANDSHAKE ROUTINE — 46
- HANDSHAKE ROUTINE — 46
  - INVALID → DISCONNECT
  - VALID → SELECT ACCESS RIGHTS — 48
- OPERATE UNDER REMOTE ACCESS — 50